# FASCICULE DE BREVET EUROPEEN

(11) **EP 0 798 915 B1**
(45) Date de publication et mention de la délivrance du brevet: **30.10.2002**
(21) Numéro de dépôt: 97400574.6
(22) Date de dépôt: 14.03.1997
(51) Int. Cl.: H04N 1/04

(54) **Equipement de bureau comprenant des moyens d'analyse d'image et des moyens d'impression d'image par laser**
Bürogerät mit Bildlesemittel und Bildlaserdruckmittel
Office equipment comprising image reading means and image laser printing means

(30) Priorité: 26.03.1996 FR 9603725
(43) Date de publication de la demande: 01.10.1997
(73) Titulaire: SAGEM SA, 75783 Paris Cédex 16 (FR)
(72) Inventeur: Frederic, Alain, 95610 Eragny S/Oise (FR)
(74) Mandataire: Bloch, Gérard

(56) Documents cités:
- EP-A- 0 028 845
- EP-A- 0 505 969
- FR-A- 2 391 612
- FR-A- 2 673 738
- US-A- 5 132 833

## Description

Afin de recevoir ou de transmettre à distance une image fixe, un télécopieur est pourvu d'un bloc d'analyse d'image, d'un bloc de restitution d'image, généralement une imprimante, d'un bloc de traitement de signaux d'image et d'un bloc d'émission et de réception des signaux d'image. L'invention tire donc son origine d'un problème de télécopieur. La demanderesse n'entend toutefois pas limiter la portée de sa demande à ces télécopieurs mais l'élargir à tout équipement de bureau pourvu d'un analyseur d'image et d'une imprimante.

Un analyseur d'image (scanner), destiné à traduire en signaux électriques des informations visuelles portées par l'image, comprend un détecteur et un système d'éclairage de l'image, par exemple un tube fluorescent ou une barrette de diodes électroluminescentes (LED).

Le détecteur d'image peut être réalisé à l'aide :
- soit d'une barrette de photodétecteurs, des phototransistors à transfert de charge CCD (Charge Coupled Devices), par exemple, associée à une optique de focalisation, et destinée à analyser ligne par ligne l'image éclairée au cours de son déplacement,
- soit d'une barrette de photodétecteurs à l'échelle un CIS (Contact Image Sensor), également destinée à analyser l'image éclairée au cours de son déplacement.

Afin de transmettre les données de l'image ainsi analysée, les photodétecteurs sont associés à des registres à décalage analogique.

L'imprimante, en particulier une imprimante laser, est pourvue d'un système d'éclairage par laser d'un tambour photosensible d'impression, le système d'éclairage comprenant soit une barrette de diodes électroluminescentes (LED), soit une diode électroluminescente, associée à des moyens mécaniques de balayage optique, par miroir tournant par exemple.

Le miroir tournant, les barrettes de photodétecteurs, l'optique de focalisation, les registres à décalage analogique et les barrettes de diodes électroluminescentes sont des éléments chers de l'analyseur d'image et de l'imprimante laser, ce qui rend élevé le coût du télécopieur.

On connaît des équipements de bureau à analyseur d'image et imprimante, dans lesquels les balayages d'analyse et d'impression sont réalisés à l'aide d'une unique source d'émission laser.

Ainsi, dans le document EP-A-0 028 845, le faisceau laser émis par la source unique est scindé en deux faisceaux, d'impression et d'analyse, respectivement.

Dans les documents US-A-5 132 833 et FR-A-2 391 612, le faisceau laser est dévié soit pour l'analyse, soit pour l'impression à l'aide d'un "commutateur" à deux positions.

De tels équipements de l'art antérieur présentent cependant l'inconvénient d'être structurellement complexes et encombrants.

La présente invention propose de réduire le coût du télécopieur et autres équipements de bureau dotés d'un analyseur d'image et d'une imprimante laser.

A cet effet, l'invention concerne un équipement de bureau comprenant des moyens d'analyse d'image comportant des moyens de photodétection associés à des moyens mécaniques d'un balayage optique d'image, et des moyens d'impression d'image par laser, les moyens d'analyse et les moyens d'impression étant regroupés dans un ensemble monobloc d'analyse et d'impression pourvu de moyens mécaniques de balayage communs à l'analyse et à l'impression comprenant un miroir tournant à au moins une face, l'équipement étant caractérisé par le fait que le miroir tournant est localisé sensiblement en un point constituant un centre de symétrie fonctionnel de l'ensemble monobloc.

Grâce à l'invention, le nombre de photodétecteurs peut être considérablement réduit, voire à un seul, réduisant ainsi le coût de l'équipement par rapport à ceux de l'art antérieur avec leurs nombreux et coûteux photodétecteurs des barrettes CCD ou CIS. Les registres à décalage analogique, également onéreux, sont supprimés.

En outre, du fait de la localisation du miroir tournant, l'ensemble monobloc est structurellement simple et compact.

De préférence encore, l'équipement de l'invention est pourvu d'une horloge électronique de modulation de la vitesse d'impression.

Ainsi, on peut asservir la vitesse d'horloge à celle du faisceau laser sur le tambour d'impression.

Les moyens de photodétection pour analyse d'image peuvent comprendre un photodétecteur associé à une lentille de focalisation.

Avantageusement, une unique diode électroluminescente éclaire l'image à analyser. Ainsi, le barreau de diodes électroluminescentes permettant d'éclairer l'image analysée des équipements du commerce est remplacé par une seule diode électroluminescente, ce qui diminue encore le coût de l'équipement de l'invention.

Enfin, il peut être prévu un moteur commun d'entraînement de papier à imprimer et d'entraînement de papier à analyser.

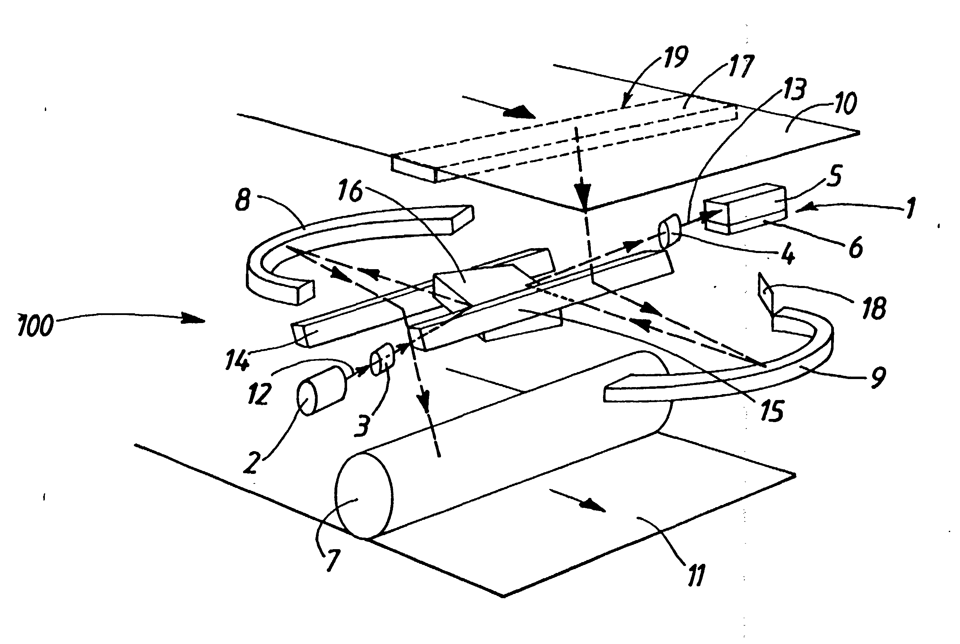

L'invention sera mieux comprise à l'aide de la description suivante d'une forme de réalisation préférée de l'équipement de bureau, en référence à la figure unique qui représente une vue en perspective éclatée de l'équipement de bureau.

On notera d'emblée, afin d'alléger la description, qu'hormis un tambour d'impression 7 et une vitre d'analyse 19, tous les éléments fonctionnels qui vont être décrits, s'étendent dans un même plan de réalisation. En outre, ce plan de réalisation est "pris en sandwich" entre un plan d'analyse et un plan d'impression portant respectivement un papier à analyser 10 et un papier à imprimer 11.

L'équipement de bureau comprend des moyens d'analyse d'image et des moyens d'impression d'image par laser.

Les moyens d'analyse comportent une tête d'analyse 1 fixe, pourvue d'une source d'éclairage 6 du papier à analyser 10, en l'espèce une diode électroluminescente (LED), et d'un phototransistor 5 de photodétection d'un élément de surface du papier à analyser 10 éclairé par la LED 6. Une lentille de focalisation 4 est associée à la tête d'analyse 1 afin de focaliser sur la surface de détection du phototransistor 5, un faisceau lumineux d'analyse 13 issu de l'élément de surface éclairé.

Les moyens d'impression comprennent une diode laser 2 d'émission d'un faisceau laser d'impression 12 destiné à venir frapper un tambour d'impression 7, et une lentille 3 de focalisation du faisceau d'impression laser 12, associée à la diode laser 2.

La tête d'analyse 1 et la diode laser 2 sont agencées en vis-à-vis, le faisceau d'analyse 13 étant reçu par la tête d'analyse 1 et le faisceau d'impression 12 étant émis par la diode 2 sensiblement le long d'une même ligne directrice du plan de réalisation, dans le même sens.

L'équipement est en outre pourvu de moyens mécaniques de balayage optique d'image pour l'analyse et pour l'impression.

Les moyens mécaniques de balayage optique du papier à analyser 10 comprennent un miroir tournant 16, ici un polygone à 6 faces, agencé entre la tête d'analyse 1 et la diode laser 2, un miroir de renvoi 15, en l'espèce, un parallélépipède allongé dont l'axe longitudinal est parallèle à la ligne directrice et jouxtant celle-ci, et un miroir de correction 9, de forme semi-annulaire, le miroir de renvoi 15 étant disposé près du miroir tournant 16, entre ce dernier le miroir de correction 9.

La LED 6 qui équipe ici la tête d'analyse 1 peut émettre un faisceau d'éclairement, qui va suivre le même trajet, en sens inverse, que le faisceau d'analyse 13. Les moyens de balayage optique décrits ci-dessus sont agencés pour que le faisceau d'analyse 13, issu de l'élément de surface éclairé du papier à analyser 10 parcourt un trajet passant successivement par le miroir de renvoi 15, le miroir de correction angulaire 9, le miroir tournant 16 et la lentille de focalisation 4, avant de venir éclairer la tête d'analyse 1 pour photodétection.

De façon à ce que le faisceau d'aclairement, et de ce fait le faisceau d'analyse 13, balaient le papier à analyser 10, le miroir tournant 16 peut être entraîné en rotation autour de son centre, et dévier lors de sa rotation le faisceau d'éclairement qui éclaire ainsi, les uns après les autres, les éléments de surface constituant une ligne 17 du papier 10, et cela pour chaque ligne successive. La vitre d'analyse 19 recouvre la ligne à analyser 17 pour améliorer la détection et le papier à analyser 10 peut être entraîné, lors de l'analyse, en translation dans le plan d'analyse.

Les moyens mécaniques de balayage optique du papier à imprimer 11 comprennent le miroir tournant 16, un miroir 14 de renvoi et un miroir 8 de correction angulaire, ces deux derniers miroirs 14 et 8, étant respectivement les symétriques des miroirs 15 et 9, par rapport à la ligne directrice.

Les moyens de balayage optique du papier à imprimer 11 sont agencés pour que le faisceau d'impression 12 émis par la diode laser 2 parcourt un trajet passant successivement par la lentille de focalisation 3, le miroir tournant 16, le miroir de correction 8 et le miroir de renvoi 14, avant de venir frapper le tambour 7 pour impression du papier 11 en appui contre ce dernier. Afin de balayer le papier 11 à imprimer, le miroir tournant 16 peut être entraîné en rotation autour de son centre, et ainsi dévier le trajet du faisceau d'impression 12, de sorte que le point d'impact du faisceau 12 sur le tambour d'impression 7 parcourt, les uns après les autres, les points d'une génératrice du tambour 7, et cela génératrice après génératrice. Lors de l'impression, le tambour 7 est entraîné en rotation et le papier à imprimer 11 se déplace simultanément en translation dans le plan d'impression, dans le sens induit par la rotation du tambour d'impression 7.

Les miroirs de renvoi 14, 15 sont prévus pour orienter les différents faisceaux lumineux. Les miroirs de correction 8, 9 permettent de corriger des erreurs angulaires introduites par le balayage lors de l'impression ou lors de l'analyse.

On remarquera, à ce stade de la description, que le tambour d'impression 7, la vitre d'analyse 19, le miroir tournant 16, les miroirs de renvoi 14 et 15, les miroir de correction 8 et 9, ainsi que la tête d'analyse 1 et la diode laser 2, respectivement associées aux lentilles de focalisation 3 et 4, forment un ensemble monobloc 100 d'analyse et d'impression. Cet ensemble monobloc intègre des moyens mécaniques de balayage optique communs à l'analyse et à l'impression comprenant le miroir tournant 16.

On soulignera en outre que le miroir tournant 16 est localisé sensiblement en un point constituant un centre de symétrie fonctionnel de l'ensemble monobloc.

L'équipement comprend encore une horloge électronique, non représentée sur la figure, destinée lors de l'impression à moduler la vitesse d'émission des points à imprimer d'un bout à l'autre d'une ligne, la vitesse de l'horloge étant asservie à la vitesse du faisceau d'impression 12 sur le tambour d'impression 7. La vitesse du faisceau d'émission des points à imprimer peut ainsi être rendue constante sur le tambour 7.

Une cellule photosensible 18, fixée à une extrémité du miroir de correction 9 permet de détecter, lors de l'analyse, l'instant auquel le faisceau d'éclairement et le faisceau d'analyse 13 atteignent une extrémité de ligne analysée, et alors commande une synchronisation de ligne.

Enfin, l'équipement intègre un moteur commun pour analyse et pour impression, d'entraînement du papier à analyser 10 et du papier à imprimer 11, comme décrit par exemple dans le brevet FR-A-2 684 509.

L'équipement qui vient d'être décrit peut être associé à d'autres équipements, tels qu'un ensemble comprenant un bloc de réception et d'émission de données de télécopie et un bloc de traitement de ces données, le tout formant un télécopieur.

Dans ce cas, l'équipement de l'invention peut exécuter l'impression de télécopie reçue. Pour cela, la diode laser 2 émet, à travers la lentille de focalisation 3, le faisceau d'impression 12 qui vient frapper le tambour d'impression 7, après plusieurs réflexions successives sur le miroir tournant 16, le miroir de correction 8 et le miroir de renvoi 14. Le miroir tournant 16, le tambour 7 sont entraînés en rotation et le papier à imprimer 11 est entraîné en translation par le moteur commun.

L'équipement peut encore, dans ce cas, analyser une télécopie à émettre. Pour cela, la tête d'analyse 1 éclaire chaque élément de surface du papier 10, en l'espèce la télécopie, la LED 6 émettant le faisceau d'éclairement pour éclairer, les uns après les autres, les éléments de surface de la télécopie 10, après plusieurs réflexions successives du faisceau d'éclairement sur le miroir tournant 16, le miroir de correction 9 et le miroir de renvoi 15. Le papier 10 est entraîné en translation par le moteur commun. L'élément de surface éclairé renvoie le faisceau d'analyse 13 qui, après plusieurs réflexions successives sur le miroir de renvoi 15, le miroir de correction 9 et le miroir tournant 16, et après focalisation à travers la lentille 4, vient éclairer la surface de détection du phototransistor 5 de la tête d'analyse 1.

Par ailleurs, l'équipement peut encore jouer le rôle d'un copieur local, en analysant un document et en l'imprimant presque en même temps.

Dans une autre forme de réalisation, la LED 6 de la tête d'analyse 1 est remplacée par un barreau de LED de plus faible puissance, jouxtant la vitre d'analyse 19.

On aurait également pu envisager d'utiliser un miroir tournant à une face, deux faces, etc.

Enfin, des moyens électroniques de correction angulaire pourraient être prévus, auquel cas les miroirs 8 et 9 ne seraient pas correcteurs.

## Revendications

1. Equipement de bureau comprenant des moyens (1, 4, 16, 9, 15, 19) d'analyse d'image comportant des moyens de photodétection (1), associés à des moyens mécaniques d'un balayage optique d'image (16, 9, 15), permettant de balayer et d'analyser les éléments d'image successifs de chaque ligne d'image, et des moyens (2, 3, 16, 8, 14) d'impression d'image par laser, les moyens d'analyse (1, 4, 16, 9, 15, 19) et les moyens d'impression (2, 3, 16, 8, 14, 7) étant regroupés dans un ensemble monobloc (100) d'analyse et d'impression pourvu de moyens mécaniques de balayage communs à l'analyse et à l'impression comprenant un miroir tournant (16) à au moins une face, l'équipement étant **caractérisé par le fait que** le miroir tournant (16) est localisé sensiblement en un point constituant un centre de symétrie fonctionnel de l'ensemble monobloc (100).

2. Equipement de bureau selon la revendication 1, dans lequel il est prévu une horloge électronique de modulation de la vitesse d'impression.

3. Equipement de bureau selon l'une des revendications 1 et 2, dans lequel les moyens de photodétection (1) pour analyse d'image sont associés à une lentille de focalisation (4).

4. Equipement de bureau selon l'une des revendications 1 à 3, dans lequel il est prévu une unique diode électroluminescente (6) d'éclairement de l'image à analyser.

5. Equipement de bureau selon l'une des revendications 1 à 3, dans lequel il est prévu un barreau de diodes électroluminescentes d'éclairement de l'image à analyser.

6. Equipement de bureau selon l'une des revendications 1 à 5, dans lequel il est prévu un moteur commun d'entraînement de papier à imprimer (11) et d'entraînement de papier à analyser (10).

## Claims

1. Office equipment including image analysis means (1, 4, 16, 9, 15, 19) comprising photosensor means (1) associated with mechanical means for optical image scanning (16, 9, 15), making it possible to scan and analyse the successive image elements of each image line, and means (2, 3, 16, 8, 14, 7) for laser printing of images, the analysis means (1, 4, 16, 9, 15, 19) and the printing means (2, 3, 16, 8, 14, 7) being grouped together in a single analysis and printing assembly (100) provided with mechanical scanning means common for analysis and printing comprising a revolving mirror (16) with at least one face, the equipment being **characterised by** the fact that the revolving mirror (16) is located substantially at a point constituting a functional centre of symmetry of the single assembly (100).

2. Office equipment according to claim 1, wherein an electronic clock for modulating the printing speed is provided.

3. Office equipment according to one of claims 1 and 2, wherein the photosensor means (1) for image analysis are associated with a focusing lens (4).

4. Office equipment according to one of claims 1 to 3, wherein a single light-emitting diode (6) for illuminating the image to be analysed is provided.

5. Office equipment according to one of claims 1 to 3, wherein a linear array of light-emitting diodes for illuminating the image to be analysed is provided.

6. Office equipment according to one of claims 1 to 5, wherein a common motor is provided for feeding paper to be printed (11) and for feeding paper to be analysed (10).

## Patentansprüche

1. Büroausrüstung, die folgendes umfasst:
- Bildanalyseeinrichtungen (1, 4, 16, 9, 15, 19) mit Photoempfängereinrichtungen (1), die mechanischen Einrichtungen einer optischen Bildabtastung (16, 9, 15) zugeordnet sind, die es ermöglicht, aufeinanderfolgende Bildelemente jeder Bildzeile abzutasten und zu analysieren, und
- Einrichtungen (2, 3, 16, 8, 14) zum Drucken des Bildes mittels Laser,
wobei die Analyseeinrichtungen (1, 4, 16, 9, 15, 19) und die Druckeinrichtungen (2, 3, 16, 8, 14, 7) zu einer integralen Analyse- und Druckeinheit (100) zusammengefasst sind, die mit mechanischen Abtasteinrichtungen versehen ist, die der Analyse und dem Druck gemeinsam sind, die einem mit mindestens einer Seite versehenen Drehspiegel (16) umfassen, wobei die Ausrüstung
**dadurch gekennzeichnet ist, dass**
der Drehspiegel (16) im wesentlichen an einer Stelle angeordnet ist, die ein funktionales Symmetriezentrum der integralen Einheit (100) darstellt.

2. Büroausrüstung nach Anspruch 1,
**dadurch gekennzeichnet, dass**
ein elektronischer Taktgeber zur Modulation der Druckgeschwindigkeit vorgesehen ist.

3. Büroausrüstung nach einem der Ansprüche 1 oder 2,
**dadurch gekennzeichnet, dass**
die Photoempfängereinrichtungen (1) zur Bildanalyse einer Fokussierungslinse (4) zugeordnet sind.

4. Büroausrüstung nach einem der Ansprüche 1 bis 3,
**dadurch gekennzeichnet, dass**
eine einzige elektrolumineszente Diode (6) zur Beleuchtung des zu analysierenden Bildes vorgesehen ist.

5. Büroausrüstung nach einem der Ansprüche 1 bis 3,
**dadurch gekennzeichnet, dass**
ein Stab elektrolumineszenter Dioden zur Beleuchtung des zu analysierenden-Bildes vorgesehen ist.

6. Büroausrüstung nach einem der Ansprüche 1 bis 5,
**dadurch gekennzeichnet, dass**
ein gemeinsamer Motor zum Antrieb des zu bedruckenden (11) Papiers und zum Antrieb des zu analysierenden (10) Papiers vorgesehen ist.
